# DEMANDE DE BREVET EUROPEEN

(11) **EP 4 494 718 A1**
(43) Date de publication de la demande: **22.01.2025**
(21) Numéro de dépôt: 24189532.5
(22) Date de dépôt: 18.07.2024
(51) Int. Cl.: A62D 1/00, A62C 13/00, A62D 1/02, H01M 10/42

(54) **COMPOSITION D'EXTINCTION D'INCENDIE D'ACCUMULATEUR LITHIUM-ION ET EXTINCTEUR COMPRENANT UNE TELLE COMPOSITION**

(30) Priorité: 20.07.2023 FR 2307807
(71) Demandeur: Société des Extincteurs Andrieu, 60110 Méru (FR)
(72) Inventeur: FRADIN, Stéphane, 92500 RUEIL-MAILMAISON (FR)
(74) Mandataire: Germain Maureau

(57) **Abrégé**

L'invention concerne une composition d'extinction d'incendie d'accumulateur lithium-ion qui est constituée de :
- entre 0,10% et 0,80% d'un agent ignifuge,
- entre 0,10% et 0,23% d'un tensioactif amphotère,
- entre 0,10% et 0,23% d'un tensioactif anionique,
- entre 0,10% et 0,23% d'un stabilisateur de mousse,
- entre 0,10% et 1,00% d'un stabilisateur thermique,
- entre 0,10% et 2,00%, d'un solvant organique choisi parmi les glycols à l'exclusion des glycols sous forme de polymères et les éthers de glycol,
- Qsp d'eau.

L'invention concerne également un extincteur d'incendie (100) comprenant une telle composition, ainsi qu'un procédé d'extinction d'un incendie d'accumulateur lithium-ion.

## Description

L'invention concerne une composition d'extinction d'incendie d'accumulateur lithium-ion et un extincteur comprenant une telle composition.

Dans le cadre de la présente invention, un accumulateur lithium-ion est un appareil utilisé pour le stockage électrochimique de l'énergie et la restitution de celle-ci au fur et à mesure des besoins. Par référence à la dénomination anglophone « battery », le terme de « batterie lithium-ion » est également employé pour désigner ce type d'accumulateur électrique. Il s'agit d'un générateur électrique constitué de deux conducteurs électriques (à savoir les électrodes) au contact d'un conducteur ionique (l'électrolyte) pouvant être sous forme de liquide, gel ou solide. Un accumulateur lithium-ion se compose d'un ensemble de cellules qui sont reliées entre elles dans un boîtier commun. Chaque cellule est une source unique d'énergie électrique basée sur la conversion de l'énergie chimique.

En effet, le principe de l'accumulateur lithium-ion repose sur l'échange réversible de l'ion lithium entre une cathode (généralement un oxyde de métal de transition lithié tel que le dioxyde de cobalt ou manganèse) et une anode (généralement en graphite) pendant les cycles de charge et de décharge, et ce avec une très bonne tenue en cyclage. L'électrolyte est aprotique (généralement un sel d'hexafluorophosphate de lithium dissous) pour passiver l'anode et éviter de dégrader les électrodes très réactives.

L'accumulateur lithium-ion présente notamment les avantages suivants :
- une haute densité d'énergie grâce aux propriétés du lithium,
- une bonne cyclabilité,
- une faible auto-décharge.

C'est pourquoi, l'accumulateur lithium-ion est largement plébiscité pour les appareils et véhicules de la vie quotidienne (téléphonie, automobile, vélo, outillage électrique) et dans les systèmes exploitant les énergies renouvelables (solaire, éolien).

Cependant, cette technologie du lithium présente l'inconvénient majeur que le contenu des cellules de l'accumulateur lithium-ion risque de s'enflammer en cas de surcharge, chauffage ou de dommages mécaniques. Une réaction chimique dite « d'emballement thermique » peut se produire au sein d'une des cellules et se propager dans les cellules adjacentes. Cela libère énormément d'énergie en très peu de temps. Cet emballement thermique s'accompagne d'une forte augmentation de la température et de la pression au sein de la cellule, ainsi que de la génération de flammes intenses qui se propagent dans tout le bloc de cellules jusqu'à ce qu'il ait totalement brûlé. En outre, cela peut également enflammer les matériaux combustibles à proximité de l'accumulateur lithium-ion.

C'est pourquoi, il est nécessaire de disposer d'extincteurs d'incendie comprenant une composition d'extinction d'incendie qui soit parfaitement adaptée à ce type de situation très dangereuse d'inflammation d'accumulateur lithium-ion.

Les compositions d'extinction d'incendie contiennent généralement des agents ignifuges en association avec des tensioactifs (qui agissent comme agents moussants), des solvants, de l'eau, et d'autres additifs qui fournissent les propriétés mécaniques et chimiques souhaitées à la mousse formée lors de l'utilisation de ladite composition d'extinction avec un extincteur d'incendie. Les compositions d'extinction d'incendie font sans cesse l'objet d'améliorations afin d'optimiser leurs caractéristiques de moussage, et obtenir un processus d'extinction d'incendie qui soit rapide, efficace, et enfin particulièrement adapté aux spécificités d'incendies auxquelles elles sont destinées.

Dans le cadre de la présente invention, un extincteur d'incendie est un dispositif portatif utilisé pour éteindre ou maîtriser un incendie de petite ou moyenne taille. Un extincteur d'incendie comprend généralement un récipient de forme cylindrique comprenant une composition d'extinction d'incendie qui est mise sous pression grâce à un gaz propulseur de manière à être déchargée sur l'incendie qu'on souhaite éteindre.

Les inventeurs de la présente invention ont mis au point une composition d'extinction d'incendie qui est particulièrement adaptée aux spécificités des incendies déclenchés par des accumulateurs lithium-ion et qui ont été détaillées ci-dessus.

C'est pourquoi, l'invention a pour objet une composition d'extinction d'incendie d'accumulateur lithium-ion qui se caractérise en ce qu'elle est constituée de, en pourcentages massiques exprimés par rapport à la masse totale de ladite composition :
- entre 0,10% et 0,80%, de préférence entre 0,30% et 0,70%, d'au moins un agent ignifuge,
- entre 0,10% et 0,23%, de préférence entre 0,15% et 0,21%, d'au moins un tensioactif amphotère,
- entre 0,10% et 0,23%, de préférence entre 0,15% et 0,21%, d'au moins un tensioactif anionique,
- entre 0,10% et 0,23%, de préférence entre 0,15% et 0,21%, d'au moins un stabilisateur de mousse,
- entre 0,10% et 1,00%, de préférence entre 0,15% et 0,70%, d'au moins un stabilisateur thermique,
- entre 0,10% et 2,00%, de préférence entre 0,5% et 1,00%, d'au moins un solvant organique choisi parmi les glycols à l'exclusion des glycols sous forme de polymères et les éthers de glycol,
- Qsp d'eau.

« Qsp » est l'acronyme pour « Quantité suffisante pour » pour signifier que le pourcentage massique d'eau dans la composition d'extinction d'incendie est tel qu'additionné aux pourcentages de tous les autres constituants de ladite composition d'extinction d'incendie, on obtienne un total de 100%.

Dans le cadre de la présente invention, on entend par :
- « agent ignifuge », un agent destiné à empêcher ou à ralentir le développement d'un incendie ;
- « tensioactif amphotère », un tensioactif comprenant des fonctions cationiques et anioniques,
- « tensioactif anionique », un tensioactif comprenant une fonction anionique.

De manière tout à fait avantageuse, la composition d'extinction d'incendie selon l'invention est dépourvue de tout composé fluoré. Cela signifie que dans ces modes de réalisation, le ou les tensioactifs amphotère(s) et anionique(s) ne comportent pas de fluor dans leur structure chimique. En effet, les tensioactifs fluorés qui étaient utilisés pendant longtemps du fait de leurs bonnes propriétés sont actuellement exclus des compositions d'extinction d'incendie pour des raisons de santé et environnementale.

Les inventeurs de la présente invention ont découvert de manière tout à fait surprenante que la combinaison d'au moins un agent ignifuge avec au moins un tensioactif amphotère, au moins un tensioactif anionique, au moins un stabilisateur de mousse, au moins un stabilisateur thermique et au moins un solvant organique dans les quantités telles que détaillées ci-dessus permet d'obtenir une composition d'extinction d'incendie particulièrement appropriée pour les incendies d'accumulateur lithium-ion. En effet, cette composition d'extinction d'incendie présente les avantages suivants : lorsqu'elle est projetée sur les flammes de l'incendie avec un extincteur d'incendie à une pression initiale de projection d'environ 10 à 12 bars et avec un débit important, ladite composition a, dans un 1^{er} temps (environ les 10 premières secondes), un effet mouillant qui permet d'agir de manière ciblée au coeur de la cellule en feu en diminuant très rapidement sa température et en éteignant les flammes et évitant leur propagation. Puis, dans un 2^{ème} temps, avec un abaissement de la pression de projection, ladite composition a un effet moussant dont le volume augmente avec le temps de manière à « enrober » toutes les cellules de l'accumulateur lithium-ion de ladite mousse. Cela a pour effet de refroidir l'ensemble des cellules de l'accumulateur lithium-ion en captant la chaleur produite, et ainsi d'abaisser la température et éviter tout risque de réinflammation ou d'explosion de l'une des cellules.

En effet, après avoir circonscrit les flammes dans un 1^{er} temps, il demeure de la chaleur au sein de l'accumulateur lithium-ion qu'il faut dissiper au plus vite pour éviter toute réinflammation ou explosion. Au fur et à mesure de la projection de la composition d'extinction selon l'invention, la mousse qui se forme devient de plus en plus volumineuse et épaisse. Elle vient entourer l'ensemble des cellules de l'accumulateur lithium-ion (donc y compris celle qui a été le point de départ de l'incendie) de manière aussi à retenir l'eau qui continue d'être pulvérisée par l'extincteur d'incendie de telle sorte que cette eau refroidisse toutes les cellules de l'accumulateur lithium-ion.

De plus, la mousse obtenue avec la composition d'extinction d'incendie demeure stable lorsqu'elle est projetée sur l'accumulateur lithium-ion incendié et elle présente un taux de foisonnement élevé.

Le taux de foisonnement est le rapport entre le volume de la mousse produite par la composition d'extinction d'incendie selon l'invention sur le volume de ladite composition d'extinction d'incendie. Plus, le taux de foisonnement est élevé, plus la mousse est légère et son volume important.

Les inventeurs de la présente invention ont ainsi découvert de manière tout à fait surprenante qu'une composition d'extinction d'incendie comprenant de très faibles quantités d'agent d'ignifuge (à savoir entre 0,10% et 0,80%, de préférence entre 0,30% et 0,70%) en association avec de très faibles quantités de tensioactifs anionique et amphotère (à savoir entre 0,10% et 0,23%, de préférence entre 0,15% et 0,21%), de stabilisateur de mousse (à savoir entre 0,10% et 0,23%), de stabilisateur thermique (à savoir entre 0,10% et 1,00%) et de solvant organique (à savoir entre 0,10% et 2,00%) par comparaison avec les compositions d'extinction d'incendie connues de l'état de l'art, était parfaitement appropriée pour éteindre des feux d'accumulateur lithium-ion comme cela a été expliqué ci-dessus.

De plus, le solvant organique en quantité telle que détaillée ci-dessus permet la formation d'un volume élevé de mousse et dans laquelle les agents ignifuges sont diffusés de manière homogène.

L'agent ignifuge que comprend la composition d'extinction d'incendie selon l'invention est avantageusement choisi dans le groupe constitué par les phosphates d'ammonium, les esters de phosphate, les phosphates halogénés, les phosphonates, le phosphore rouge, le silicate de calcium, le silicate de sodium, le trihydroxyde d'aluminium, le dihydroxyde de magnésium, les éthers de diphényle polybromé, le tétrabromobisphénol A, l'hexabromocyclododécane et les bromophénols, pris seul ou en mélange de ceux-ci.

De préférence, l'agent ignifuge est choisi parmi les phosphates d'ammonium. De manière tout à fait préférée, l'agent ignifuge est le phosphate de diammonium et/ou le dihydrogénophosphate d'ammonium.

Le tensioactif amphotère peut être avantageusement choisi dans le groupe constitué par les bétaïnes, les sultaïnes, les alkylamphoacétates, les amphodiacétates, les alkylamphopropionates, les alkyliminodipropionates, les amphodipropionates, les composés aliphatiques d'ammonium quaternaire, les composés aliphatiques de phosphonium quaternaire et les composés aliphatiques de sulfonium quaternaire, pris seul ou en mélange de ceux-ci.

De manière tout à fait avantageuse, le tensioactif amphotère peut être choisi dans le groupe constitué par les bétaïnes, les sultaïnes, les alkylamphoacétates, les amphodiacétates, les alkylamphopropionates, les alkyliminodipropionates et les amphodipropionates, pris seul ou en mélange de ceux-ci.

De préférence, le tensioactif amphotère est une bétaïne et/ou un alkylamphopropionate.

Lorsque le tensioactif amphotère est une bétaïne, elle peut être choisie dans le groupe constitué par les betaïnes, les alkyl bétaïnes, les alkylamido bétaïnes et les sulfobétaïnes.

Par exemple, en ce qui concerne les alkyl bétaïnes, il peut s'agir de la coco diméthyl carboxymethyl bétaïne, la cocobétaïne, l'oléyl bétaïne, la lauryl diméthyl carboxyméthyl bétaïne, la lauryl diméthyl alpha-carboxyéthyl bétaïne, la cétyl diméthyl carboxyméthyl bétaïne, la lauryl bis-(2-hydroxyéthyl) carboxyméthyl bétaïne, la stéaryl bis-(2-hydroxypropyl) carboxyméthyl bétaïne, l'oléyl diméthyl gamma-carboxypropyl bétaïne, la lauryl bis-(2- hydroxypropyl)alpha-carboxyéthyl bétaïne.

Par exemple, en ce qui concerne les alkyl amidopropyl betaïnes, il peut s'agir de la cocoamidopropyl bétaïne, la lauryl amidopropyl bétaïne, l'oléamidopropyl bétaïne, l'amidopropyl bétaïne érucique.

Par exemple, en ce qui concerne les sulfobétaïnes, il peut s'agir de la coco dimethyl sulfopropyl bétaïne, la stéaryl diméthyl sulfopropyl bétaïne, la lauryl diméthyl sulfoéthyl bétaïne, la lauryl bis-(2-hydroxyéthyl) sulfopropyl bétaïne.

Le tensioactif amphotère peut être un composé choisi parmi les composés aliphatiques d'ammonium quaternaire, de phosphonium quaternaire ou de sulfonium quaternaire. Il peut s'agir du 4-[N,N-di(2-hydroxyéthyl)-N-octadécylammonio]-butane-1-carboxylate, 5-[S-3-hydroxypropyl-5-hexadécylsulfonio]-3-hydroxypentane- 1-sulfate, 3-[P,P-diéthyl-P-3,6,9-trioxatétradecoxylphosphonio]-2-hydroxy-propane-1-phosphate, 3-[N,N-dipropyl-N-3-dodécoxy-2-hydroxypropylammonio]-propane-1-phosphonate, 3-(N,N-diméthyl-N-hexadécylammino)propane-1-sulfonate, 3-(N,N-diméthyl-N-hexadécylammonio)-2-hydroxypropane-1-sulfonate, 4-[N,N-di(2-hydroxyéthyl)-N-(2-hydroxydodécyl)ammonio]-butane-1-carboxylate, 3-[S-éthyl-S-(3-dodécoxy-2-hydroxypropyl)sulfonio]-propane-1-phosphate, 3-[P,P- diméthyl-P-dodécylphosphonio]-propane-1-phosphonate ou 5-[N,N-di(3-hydroxypropyl)-N-hexadécylammonio]-2-hydroxy-pentane-1-sulfate.

De manière préférée, le tensioactif amphotère est choisi dans le groupe constitué par la coco diméthyl carboxymethyl bétaïne, l'oléyl bétaïne, la lauryl bis-(2-hydroxyéthyl) carboxyméthyl bétaïne, la lauryl amidopropyl bétaïne, la lauryl diméthyl alpha-carboxyéthyl bétaïne, la stéaryl bis-(2-hydroxypropyl) carboxyméthyl bétaïne et les alkylamphopropionates, pris seul ou en mélange de ceux-ci.

Le tensioactif anionique peut être avantageusement choisi dans le groupe constitué par les sulfates d'alkyle, les sulfates d'éther alkylique, les sulfonates d'éther alkylique, les esters de sulfate d'un alkylphénoxy polyoxyéthylène éthanol, les sulfates d'ammonium d'alcool, les sulfonates d'alpha-oléfine, les sulfonates de bêta alcoxy alcane, les sulfonates d'alkylauryle, les sulfates de monoglycéride d'alkyle, les sulfonates de monoglycéride d'alkyle, les carbonates d'alkyle, les carboxylates d'éther alkylique, les acides gras, les sulfates d'alcool gras, les sulfosuccinates, les sarcosinates, les phosphates d'octoxynol ou de nonoxynol, les taurates, les taurures gras, les amides d'acide gras-polyoxyéthylènes, les iséthionates et les dérivés anioniques de polyglucosides d'alkyle, pris seul ou en mélange de ceux-ci.

De préférence, le tensioactif anionique est choisi parmi des sulfates d'alkyle en C8-C18, des sels d'acide gras en C8-C18, des sulfates d'éther alkylique en C8-C18 comportant une ou deux moles d'ethoxylation, des oxydes d'alcamine en C8-C18, des sarcosinates d'alcoyle en C8- C18, des sulfoacétates en C8-C18, des sulfosuccinates en C8-C18, des disulfonates d'oxyde d'alkyl diphényle en C8-C18, des carbonates d'alkyle en C8-C18, des sulfonates d'alpha-oléfine en C8-C18 et des sulfonates d'ester méthylique, pris seul ou en mélange de ceux-ci

De manière avantageuse, le tensioactif anionique est choisi parmi des sulfates de lauryle, des sulfates d'octyle, des sulfates de 2-éthylhexyle, de l'oxyde de lauramine, des sulfates de décyle, des sulfates de tridécyle, de l'alkylsulfate d'ammonium de triéthanol, des cocoates, des sarcosinates de lauroyle, des sulfosuccinates de lauryle, des disulfonates d'oxyde de diphényle linéaires en C10, des sulfosuccinates de lauryle, des sulfates d'éther laurylique, des sulfates de myristyle, des oléates, des stéarates, des tallates, des ricinoléates et des sulfates de cétyle, pris seul ou en mélange de ceux-ci.

Le tensioactif anionique peut être également choisi parmi des sulfonates d'alkyle, des sulfonates d'alkylaryle, des disulfonates d'oxyde de diphényle alkylés, des sulfonates de naphtalène alkylés, des iséthionates, des acides alkylaryl sulfoniques, des sulfonates d'alcane secondaire, des carboxylates d'alcoxylate, des sarcosinates, du taurate, des acides acyl aminés, des esters alcanoïques, des esters de phosphate, des esters d'acide sulfurique, pris seul ou en mélange de ceux-ci.

De préférence, le tensioactif anionique est choisi parmi du carboxylate de lauryl glucoside de sodium, citrate de coco- glucoside de disodium, tartrate de coco-glucoside de sodium, sulfosuccinate de coco-glucoside de disodium, hydroxypropylsulfonate de cocoglucoside de sodium, l'hydroxypropylsulfonate de décylglucosides de sodium, hydroxypropylsulfonate de laurylglucosides de sodium, les polymères réticulés de cocoglucoside de sodium-hydroxypropylsulfonate, les polymères réticulés de décylglucoside de sodium-hydroxypropylsulfonate, les polymères réticulés de laurylglucoside de sodium-hydroxypropylsulfonate, pris seul ou en mélange de ceux-ci.

De manière tout à fait préférée, le tensioactif anionique est choisi dans le groupe constitué par les sulfonates de naphtalène alkylés, l'hydroxypropylsulfonate de cocoglucoside de sodium, les polymères réticulés de cocoglucoside de sodium-hydroxypropylsulfonate et les polymères réticulés de laurylglucoside de sodium-hydroxypropylsulfonate, pris seul ou en mélange de ceux-ci.

La composition d'extinction d'incendie selon l'invention comprend au moins un solvant organique choisi parmi les glycols qui ne sont pas sous forme de polymères et les éthers de glycol. Le solvant organique à mettre en oeuvre est parfaitement connu de l'homme du métier dans le domaine technique de la présente invention.

Le solvant organique peut être choisi dans le groupe constitué par l'éthylène glycol, le propylène glycol, le butyl-di-glycol, l'éther n-propylique de dipropylène glycol, l'éther n-butylique de dipropylène glycol, l'éther n-butylique de propylène glycol, le propylène glycol, l'éther n-propylique, l'éther n-butylique de tripropylène glycol, l'éther phénylique de propylène glycol, l'éther phénylique de dipropylène glycol, l'éther diméthylique de dipropylène glycol, l'éther méthylique de propylène glycol, l'acétate d'éther méthylique de propylène glycol, l'éther méthylique de dipropylène glycol, l'acetate d'éther méthylique de dipropylène glycol, l'éther méthylique de tripropylène glycol, l'éther hexylique d'éthylène glycol, l'éther hexylique de diéthylène glycol, l'éther monométhylique d'éthylène glycol, l'éther monoéthylique d'éthylène glycol, l'éther monopropylique d'éthylène glycol, l'éther monoisopropylique d'éthylène glycol, l'éthylène glycol, l'éther monobutylique, l'éther monobenzylique d'éthylène glycol, l'éther phenylique de diéthylène glycol, l'éther phénylique d'éthylène glycol, poly(oxy-1,2-éthanediyle), l'éther monométhylique de diéthylène glycol, l'éther monoéthylique de diéthylène glycol, de l'éther n-butylique de diéthylène glycol, l'éther n-butylique d'éthylène glycol, l'éther méthylique de dipropylène glycol, pris seul ou en mélange de ceux-ci.

De manière tout à fait préférée, le solvant organique est choisi dans le groupe constitué par l'éthylène glycol, le propylène glycol et l'éther n-propylique de dipropylène glycol, pris seul ou en mélange de ceux-ci.

La composition d'extinction d'incendie selon l'invention comprend au moins un stabilisateur de mousse. Cela permet d'améliorer la stabilité de la mousse et donc de prolonger l'activité d'extinction d'incendie de ladite composition.

Les stabilisateurs de mousse sont parfaitement connus de l'homme du métier dans le domaine technique de la présente invention et classiquement mis en oeuvre dans des compositions d'extinction d'incendie. L'au moins un stabilisateur de mousse peut être choisi parmi les alcools et amides gras aliphatiques comportant 8 à 25 atomes de carbone, le polyéthylène glycol et le polypropylène glycol. Par exemple en ce qui concerne les alcools gras, il peut s'agir d'alcool laurique, myristique ou cétylique.

La composition d'extinction d'incendie selon l'invention comprend au moins un stabilisateur thermique. Le stabilisateur thermique permet d'améliorer la stabilité de la mousse obtenue à partir de la composition d'extinction selon l'invention dans des conditions d'incendie pouvant atteindre des températures extrêmement élevées car pouvant être comprises entre environ 75°C et environ 500°C. Les stabilisateurs thermiques sont parfaitement connus de l'homme du métier dans le domaine technique de la présente invention et classiquement mis en oeuvre dans des compositions d'extinction d'incendie.

Le stabilisateur thermique peut être choisi dans le groupe constitué par le phosphate d'ammonium, les phosphates d'ester, le citrate de sodium, le sucrose, le maltose, le dextrose, le bicarbonate de sodium, le carbonate de sodium, le carbonate de potassium, le bicarbonate de potassium, le sulfate de sodium, l'orthophosphate de sodium, pris seul ou en mélange de ceux-ci. De préférence, le stabilisateur thermique est choisi parmi le sucrose, le maltose et le dextrose, pris seul ou en mélange de ceux-ci.

Dans un mode de réalisation de l'invention, la composition d'extinction d'incendie est constituée de, en pourcentages massiques exprimés par rapport à la masse totale de ladite composition :
- entre 0,10% et 0,80%, de préférence entre 0,30% et 0,70%, d'au moins un agent ignifuge choisi parmi les phosphates d'ammonium,
- entre 0,10% et 0,23%, de préférence entre 0,15% et 0,21%, d'au moins un tensioactif amphotère choisi parmi les bétaïnes et/ou les alkylamphopropionates,
- entre 0,10% et 0,23%, de préférence entre 0,15% et 0,21%, d'au moins un tensioactif anionique choisi parmi les sulfates d'alkyle, les sulfates d'éther alkylique, les sulfonates d'éther alkylique, les esters de sulfate d'un alkylphénoxy polyoxyéthylène éthanol, les sulfates d'ammonium d'alcool, les sulfonates d'alpha-oléfine, les sulfonates de bêta alcoxy alcane, les sulfonates d'alkylauryle, les sulfates de monoglycéride d'alkyle, les sulfonates de monoglycéride d'alkyle, les carbonates d'alkyle, les carboxylates d'éther alkylique, les acides gras, les sulfates d'alcool gras, les sulfosuccinates, les sarcosinates, les phosphates d'octoxynol ou de nonoxynol, les taurates, les taurures gras, les amide d'acide gras-polyoxyéthylènes, les iséthionates et les dérivés anioniques de polyglucosides d'alkyle, pris seul ou en mélange de ceux-ci,
- entre 0,10% et 0,23%, de préférence entre 0,15% et 0,21%, d'au moins un stabilisateur de mousse choisi parmi les alcools et amides gras aliphatiques comportant 8 à 25 atomes de carbone, le polyéthylène glycol et le polypropylène glycol, pris seul ou en mélange de ceux-ci,
- entre 0,10% et 1,00%, de préférence entre 0,15% et 0,70%, d'au moins un stabilisateur thermique choisi parmi le phosphate d'ammonium, les phosphates d'ester, le citrate de sodium, le sucrose, le maltose, le dextrose, le bicarbonate de sodium, le carbonate de sodium, le carbonate de potassium, le bicarbonate de potassium, le sulfate de sodium et l'orthophosphate de sodium, pris seul ou en mélange de ceux-ci,
- entre 0,10% et 2,00%, de préférence entre 0,5% et 1,00%, d'au moins un solvant organique choisi parmi l'éthylène glycol, le propylène glycol, le butyl-di-glycol, l'éther n-propylique de dipropylène glycol, l'éther n-butylique de dipropylène glycol, l'éther n-butylique de propylène glycol, le propylène glycol, l'éther n-propylique, l'éther n-butylique de tripropylène glycol, l'éther phénylique de propylène glycol, l'éther phénylique de dipropylène glycol, l'éther diméthylique de dipropylène glycol, l'éther méthylique de propylène glycol, l'acétate d'éther méthylique de propylène glycol, l'éther méthylique de dipropylène glycol, l'acétate d'éther méthylique de dipropylène glycol, l'éther méthylique de tripropylène glycol, l'éther hexylique d'éthylène glycol, l'éther hexylique de diéthylène glycol, l'éther monométhylique d'éthylène glycol, l'éther monoéthylique d'éthylène glycol, l'éther monopropylique d'éthylène glycol, l'éther monoisopropylique d'éthylène glycol, l'éthylène glycol, l'éther monobutylique, l'éther monobenzylique d'éthylène glycol, l'éther phénylique de diéthylène glycol, l'éther phénylique d'éthylène glycol, poly(oxy-1,2-éthanediyle), l'éther monométhylique de diéthylène glycol, l'éther monoéthylique de diéthylène glycol, l'éther n-butylique de diéthylène glycol, l'éther n-butylique d'éthylène glycol et l'éther méthylique de dipropylène glycol, pris seul ou en mélange de ceux-ci,
- Qsp d'eau.

Dans un mode de réalisation de l'invention, la composition d'extinction d'incendie est constituée de, en pourcentages massiques exprimés par rapport à la masse totale de ladite composition :
- entre 0,10% et 0,80%, de préférence entre 0,30% et 0,70%, d'au moins un agent ignifuge choisi parmi le phosphate de diammonium et/ou le dihydrogénophosphate d'ammonium,
- entre 0,10% et 0,23%, de préférence entre 0,15% et 0,21%, d'au moins un tensioactif amphotère choisi dans le groupe constitué par la coco diméthyl carboxymethyl bétaïne, l'oléyl bétaïne, la lauryl bis-(2-hydroxyéthyl) carboxyméthyl bétaïne, la lauryl amidopropyl bétaïne, la lauryl diméthyl alpha-carboxyéthyl bétaïne, la stéaryl bis-(2-hydroxypropyl) carboxyméthyl bétaïne et les alkylamphopropionates, pris seul ou en mélange de ceux-ci,
- entre 0,10% et 0,23%, de préférence entre 0,15% et 0,21%, d'au moins un tensioactif anionique choisi dans le groupe constitué par les sulfonates de naphtalène alkylés, l'hydroxypropylsulfonate de cocoglucoside de sodium, les polymères réticulés de cocoglucoside de sodium-hydroxypropylsulfonate et les polymères réticulés de laurylglucoside de sodium-hydroxypropylsulfonate, pris seul ou en mélange de ceux-ci,
- entre 0,10% et 0,23%, de préférence entre 0,15% et 0,21%, d'au moins un stabilisateur de mousse choisi parmi l'alcool laurique, myristique, cétylique, le polyéthylène glycol et le polypropylène glycol, pris seul ou en mélange de ceux-ci,
- entre 0,10% et 1,00%, de préférence entre 0,15% et 0,70%, d'au moins un stabilisateur thermique choisi parmi le sucrose, le maltose et le dextrose, pris seul ou en mélange de ceux-ci,
- entre 0,10% et 2,00%, de préférence entre 0,5% et 1,00%, d'au moins un solvant organique choisi parmi l'éthylène glycol, le propylène glycol et l'éther n-propylique de dipropylène glycol, pris seul ou en mélange de ceux-ci.
- Qsp d'eau.

La composition d'extinction d'incendie selon l'invention est utilisée avec un extincteur d'incendie pour éteindre un incendie d'accumulateur lithium-ion.

C'est pourquoi, l'invention a pour objet un extincteur d'incendie qui se caractérise en ce qu'il comprend au moins une composition d'extinction d'incendie selon l'invention et telle que décrite ci-dessus.

En outre, les inventeurs de la présente invention ont découvert de manière tout à fait surprenante que la composition d'extinction selon l'invention telle que décrite ci-dessus est particulièrement efficace pour éteindre un incendie d'accumulateur lithium-ion lorsqu'elle est utilisée en association avec un extincteur d'incendie présentant des caractéristiques techniques spécifiques qui sont décrites ci-après.

C'est pourquoi, de manière avantageuse l'extincteur d'incendie comporte :
- un réservoir étanche s'étendant selon un axe et contenant la composition d'extinction d'incendie selon l'invention telle que décrite ci-dessus, ledit réservoir est configuré pour comprendre une chambre d'expansion formée par une partie du réservoir non remplie par ladite composition d'extinction d'incendie,
- une bouteille de chasse, étanche et contenant un gaz propulseur sous pression, à usage de propulseur pour la composition d'extinction d'incendie, la bouteille de chasse étant logée à l'intérieur du réservoir et présentant, pour le gaz propulseur, une sortie reliée de façon fluidique à l'intérieur du réservoir, ledit extincteur d'incendie se caractérise en ce qu'il comporte en outre :
   - un tube de mélange présentant une 1^{ère} extrémité et une 2^{ème} extrémité, la 1^{ère} extrémité étant reliée de façon fluidique à la sortie de la bouteille de chasse et la 2^{ème} extrémité étant obturée, ledit tube de mélange comporte au moins un orifice latéral par rapport à l'axe et qui est configuré pour libérer le gaz propulseur dans la chambre d'expansion dudit réservoir.

On entend par « une partie du réservoir non remplie par la composition d'extinction d'incendie », une partie du réservoir délimitant un 1^{er} volume du réservoir non occupé par la composition d'extinction d'incendie d'un 2^{ème} volume du réservoir occupé par ladite composition d'extinction d'incendie. On comprendra que la délimitation entre le 1^{er} volume et le 2^{ème} volume dépend du niveau de la composition d'extinction d'incendie contenue dans le réservoir déplaçable dans le réservoir en fonction de l'orientation donnée au réservoir par rapport à un axe vertical par rapport au sol.

Lorsque le gaz propulseur sous pression est libéré, celui-ci est injecté dans la chambre d'expansion du réservoir de manière à la pressuriser de sorte que la pression contenue dans cette chambre d'expansion pressurise à son tour la composition d'extinction d'incendie, favorisant ainsi sa remontée par un tube de remontée que peut comprendre l'extincteur d'incendie et ainsi sa sortie hors de l'extincteur d'incendie. Ainsi, dans un mode de réalisation de l'invention, l'extincteur d'incendie peut ainsi comprendre un tube de remontée et un tube flexible de lance.

Ce tube de remontée est relié de façon fluidique à ce tube flexible de lance qui est muni de moyens d'obturation étanches et dont l'ouverture peut être commandée et réglée pour libérer la composition d'extinction d'incendie selon l'invention. De préférence, une des extrémités du tube de remontée est proche du fond du réservoir. Cela facilite la sortie de la totalité, ou de la quasi-totalité, de la composition d'extinction d'incendie lors de l'utilisation de l'extincteur d'incendie. Le tube de remontée présente avantageusement une longueur de 575 mm.

L'au moins un orifice latéral permet au gaz propulseur d'arriver dans la chambre d'expansion. Ainsi, il ne se diffuse pas dans la composition d'extinction d'incendie. Cette configuration du tube de mélange évite que le gaz propulseur appauvrisse le pouvoir moussant de l'extincteur d'incendie.

On comprendra que, pour le tube de mélange, un orifice latéral par rapport à l'axe du réservoir, est formé latéralement sur ce tube, c'est-à-dire sur la paroi latérale de ce tube dans toute direction le long d'un axe secondaire présentant une orientation différente de l'axe du réservoir, l'axe secondaire étant sécant à l'axe du réservoir ou non sécant à l'axe du réservoir.

Optionnellement, l'au moins un orifice latéral est radial par rapport à l'axe du réservoir.

Dans un mode de réalisation de l'invention, ledit tube de mélange comporte deux orifices latéraux (plus préférentiellement radiaux) par rapport à l'axe du réservoir.

L'au moins un orifice latéral peut présenter un diamètre compris entre 0,5 mm et 2,5 mm, de préférence compris entre 1 mm et 2 mm, encore plus préférentiellement égal à 2 mm.

Dans un mode de réalisation préféré de l'invention, le tube de mélange comprend 2 orifices latéraux (plus préférentiellement radiaux) par rapport à l'axe du réservoir. Ces 2 orifices latéraux (plus préférentiellement radiaux) présentent avantageusement un diamètre égal à 2 mm.

De préférence, l'au moins un orifice latéral qui est le plus proche de la 1^{ère} extrémité du tube de mélange se situe à une distance d'environ de 2 cm de ladite 1^{ère} extrémité.

Selon un mode de réalisation de l'invention, la bouteille de chasse comporte intérieurement un tube de remontée du gaz propulseur, étanche, raccordé de façon étanche à la sortie de la bouteille de chasse et relié de façon fluidique dans la bouteille de chasse. Ainsi, après la percussion d'un opercule de la bouteille de chasse, l'intégralité de l'expulsion du gaz propulseur est facilitée puisqu'il ne peut quitter la bouteille de chasse que par remontée dans ce tube de mélange.

Le gaz propulseur peut être choisi dans le groupe constitué par l'azote, l'argon et le dioxyde de carbone, pris seul ou en mélange de ceux-ci. De préférence, le gaz propulseur est du dioxyde de carbone.

Comme expliqué ci-dessus, l'extincteur d'incendie comprend un tube de remontée permettant la sortie de la composition d'extinction d'incendie hors de l'extincteur d'incendie.

Ce tube de remontée débouche sur une 1^{ère} extrémité d'un conduit de sortie qui est lui-même raccordé de façon étanche à sa 2^{ème} extrémité à un tube flexible et étanche de lance (par exemple d'une longueur de 700 mm). La 2^{ème} extrémité du conduit de sortie présente très avantageusement un diamètre de 11 mm. Cela permet un temps de fonctionnement de l'extincteur d'incendie d'environ 90 secondes ; ce qui est parfaitement approprié pour éteindre un incendie d'accumulateur lithium-ion.

Le tube flexible de lance est muni de moyens d'obturation étanches et d'ouverture commandée et réglée, par action de l'opérateur sur une poignée, par exemple rappelée automatiquement vers un état correspondant à la fermeture étanche dudit tube flexible. Ces moyens d'obturation sont avantageusement reliés à un système de diffusion configuré pour la pulvérisation de la composition d'extinction d'incendie. Dans un mode de réalisation de l'invention, l'extincteur d'incendie comporte un système de diffusion.

De préférence, le système de diffusion est un diffuseur à effet Venturi. Cela présente l'avantage d'aérer la composition d'extinction d'incendie selon l'invention à la sortie du tube flexible et étanche de lance et ainsi qu'elle se transforme en mousse lors de l'abaissement de la pression de pulvérisation de ladite composition d'extinction d'incendie. Par exemple, sans y être limité, le système de diffusion peut être ou comprendre avantageusement une buse d'extinction telle que décrite dans la demande de brevet BE 1028003 A1.

L'invention peut comprendre en outre l'une des caractéristiques suivantes prises seules ou en combinaison :
- le tube de mélange n'est pas immergé dans la composition d'extinction d'incendie,
- la longueur du tube de mélange peut être comprise entre 50 mm et 540 mm, de préférence égale à 125 mm,
- la hauteur totale du réservoir peut être comprise entre 400 mm et 600 mm, de préférence comprise entre 428 mm et 580 mm,
- le volume de composition d'extinction d'incendie que peut comprendre le réservoir est compris entre 6 L et 9 L, de préférence 9 L,
- le volume de la chambre d'expansion peut être compris entre 1,5L et 1,8L, de préférence 1,6 L,
- le volume interne du réservoir peut être compris entre 7,75L et 12L, de préférence 10,6 L,
- le tube de mélange présente un diamètre intérieur compris entre 3 mm et 10 mm, préférentiellement compris entre 6 mm et 7 mm, encore plus préférentiellement égal à 5 mm,
- un opercule d'obturation étanche en sortie de la bouteille de chasse pour le gaz propulseur,
- des moyens de commande de percussion de l'opercule.

Dans un mode de réalisation de l'invention, le tube de mélange présente un diamètre intérieur compris entre 3 mm et 10 mm et une longueur comprise entre 50 mm et 540 mm.

La longueur du tube de mélange telle que décrite ci-dessus, de préférence égale à 125 mm, est particulièrement appropriée pour qu'en association avec l'au moins un orifice latéral, le gaz propulseur se diffuse correctement dans la chambre d'expansion afin de pressuriser la composition d'extinction d'incendie selon l'invention.

Dans un mode réalisation de l'invention, l'extincteur d'incendie peut être configuré de telle sorte que la pression de la composition d'extinction d'incendie en sortie de l'extincteur et qui est pulvérisée dans l'air en vue d'éteindre l'incendie d'accumulateur lithium-ion évolue de la manière suivante au cours du temps :
- temps initial (« t=0 ») : au moment de la percussion de l'opercule de la bouteille de chasse, la pression est comprise entre 12 bars et 14 bars, la composition d'extinction d'incendie est mouillante, à savoir encore essentiellement sous forme liquide. Cela permet d'éteindre les flammes.
- entre t initial et 5 secondes après le temps initial, la pression a diminué pour atteindre environ 8 bars. La composition d'extinction d'incendie commence à mousser. Elle commence à dégouliner lentement autour de l'accumulateur lithium-ion.
- entre 5 secondes et 20 secondes après le temps initial, la pression a diminué pour atteindre environ 5 bars. La composition d'extinction d'incendie est essentiellement sous forme de mousse.
- entre 30 secondes et 60 secondes après le temps initial, la pression a encore diminué pour atteindre environ 4 bars. La composition d'extinction d'incendie est essentiellement sous forme de mousse.
- entre 60 secondes et 90 secondes après le temps initial, la pression a diminué pour atteindre environ 0 bar. La composition d'extinction d'incendie est essentiellement sous forme de mousse.

Il est important de souligner que lorsque la composition d'extinction d'incendie se présente sous forme de mousse, elle recouvre l'accumulateur lithium-ion et tombe lentement le long des parois de celui-ci ; ce qui forme une barrière à la chaleur et permet ainsi de faire diminuer la température de l'accumulateur lithium-ion incendié et ainsi d'éteindre parfaitement l'incendie.

L'invention a aussi pour objet un procédé d'extinction d'un incendie d'un accumulateur lithium-ion qui se caractérise en ce qu'on pulvérise une composition d'extinction d'incendie selon l'invention telle que décrite ci-dessus avec un extincteur d'incendie selon l'invention tel que décrit ci-dessus sur un accumulateur lithium-ion en feu.

D'autres caractéristiques et avantages d'un extincteur d'incendie selon l'un quelconque des aspects de l'invention ressortiront de la description ci-dessous, relatifs à un exemple non limitatif de réalisation de celui-ci.
[Fig. 1] représente une vue en coupe de l'extincteur selon l'invention à l'état assemblé, équipé d'un flexible de lance, d'une gâchette et d'un diffuseur, ceci pour illustrer particulièrement un tube de remontée contenu dans son réservoir.
[Fig. 2] représente une autre vue en coupe de l'extincteur selon l'invention à l'état assemblé, sans le flexible de lance, la gâchette et le diffuseur, ceci pour illustrer particulièrement un tube de mélange contenu dans le réservoir.
[Fig. 3] représente un agrandissement de la figure 2 illustrant plus en détail une configuration du tube de mélange.
[Fig. 4] représente une vue en coupe d'une bouteille de chasse comprise dans le réservoir et contenant le gaz propulseur.
[Fig. 5] représente une vue partiellement éclatée de l'extincteur où l'on a représenté partiellement l'intérieur du réservoir.
[Fig. 6] représente une vue en perspective d'un exemple de système de diffusion.

En référence aux figures, on a représenté une vue en coupe de l'extincteur 100 selon l'invention. L'extincteur comprend un réservoir 120 et un couvercle 180. Le réservoir 120 présente une forme générale de révolution autour d'un axe A1 qui, dans une orientation déterminée d'utilisation de l'extincteur 100, est vertical par rapport à un plan horizontal, comme on l'a illustré aux figures ou forme quelques degrés d'angle d'inclinaison par rapport à la verticale. Cette orientation déterminée d'utilisation de l'extincteur 100 servira de référence à la suite de la description.

Par « vertical », on entend la direction du vecteur de gravité ; et par « plan horizontal », on entend un plan perpendiculaire à cette direction du vecteur de gravité.

Le réservoir 120 présente une paroi latérale 121, par exemple cylindrique de révolution autour de l'axe A1, une paroi de fond 122, par exemple convexe vers le bas, à laquelle cette paroi latérale 121 se raccorde dans une zone inférieure du réservoir 120, et une paroi de sommet 123 à laquelle la paroi latérale 120 se raccorde dans une zone supérieure du réservoir 120. Ces parois 120-123 sont étanches et raccordées mutuellement de façon étanche aux gaz et aux liquides de façon à contenir une composition d'extinction d'incendie selon l'invention 200 qui remplit le réservoir 120, par exemple sur la majeure partie de sa hauteur, le reste du réservoir 120 étant rempli d'air à la pression atmosphérique, l'air étant localisé dans la zone supérieure du réservoir 120. Ledit reste du réservoir 120 forme une chambre d'expansion 120' dans le réservoir 120.

Le terme « haut » se définit par rapport à l'axe A1 comme vers la paroi de sommet 123 du réservoir 120, alors que le terme « bas » se définit par rapport à l'axe A1 comme vers la paroi de fond 122 du réservoir 120.

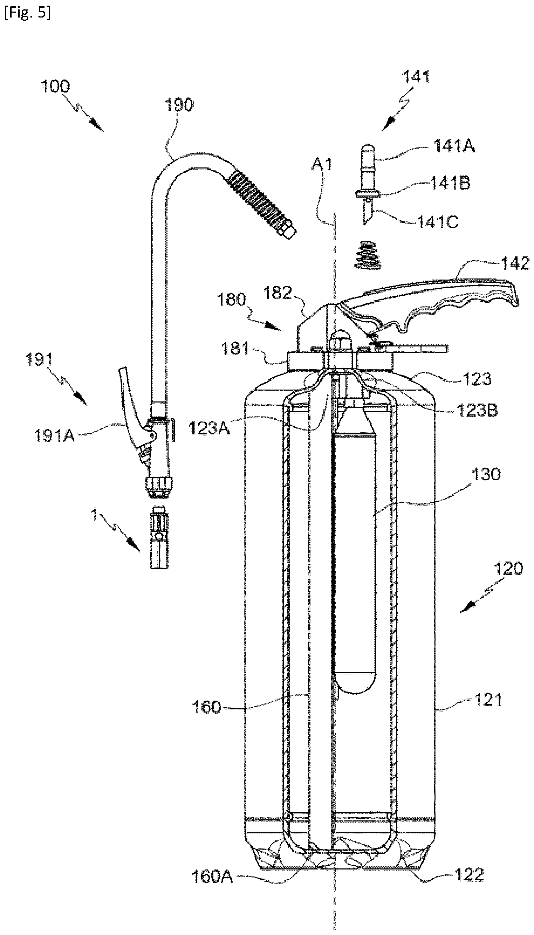

La paroi de sommet 123 est percée, de part en part, d'un orifice 123A de remplissage en composition d'extinction d'incendie 200. Cet orifice 123A est avantageusement délimité par un bord 123B de la paroi de sommet 123, lequel bord 123B est annulaire de révolution autour de l'axe A1. Le couvercle 180 est rapporté, par exemple de façon amovible, sur le réservoir 120, pour obturer de façon étanche l'orifice 123A, et, comme le montre mieux la figure 5, comporte à cet effet une paroi plate 181 présentant la forme générale d'un disque de révolution autour de l'axe A1, laquelle paroi plate 181 présente vers le bas une gorge annulaire, de révolution autour de l'axe A1, propre à recevoir le bord 123B de l'orifice 123A et à s'appliquer de façon étanche sur ce bord 123B par l'intermédiaire d'un joint non illustré, lorsque le couvercle 180 est fixé sur le réservoir 120. Cette fixation s'effectue par exemple, de façon connue en elle-même, par un boulonnage 124, préservant l'étanchéité du réservoir 120 par la paroi plate 181 du couvercle 180, sur la paroi de sommet 123 autour de l'orifice 123A du réservoir 120.

La paroi plate 181 présente ainsi vers le bas une face inférieure plane 181A, perpendiculaire à l'axe A1, dans laquelle la gorge est creusée. Dans le sens d'un éloignement par rapport à l'axe A1, la face inférieure 181A se raccorde à un chant non référencé de la paroi plate 181, lequel présente par exemple une forme générale cylindrique de révolution autour de l'axe A1 et raccorde la face inférieure 181A de la paroi plate 181 à une face supérieure 181B de la paroi plate 181. Cette face supérieure 181B, située à l'extérieur du réservoir 120 et par conséquent exposée à l'air ambiant, est plane et perpendiculaire à l'axe A1 comme la face 181A.

Sur la face supérieure 181B fait saillie vers le haut, suivant l'axe A1, un bossage 182 avantageusement réalisé d'une pièce avec la paroi plate 181 et percé, d'un côté de l'axe A1, d'un conduit 183 de sortie de la composition d'extinction d'incendie 200 contenue dans le réservoir 120, lequel conduit 183 présente à cet effet une embouchure 183A débouchant dans la face inférieure 181A de la paroi plate 181 et un débouché 183B dans le bossage 182.

L'extincteur 100 comprend par ailleurs des moyens de commande 140 de percussion d'un opercule 134 de la bouteille de chasse 130.

L'embouchure 183A se prolonge à l'intérieur du réservoir 120, par un tube de remontée 160, rectiligne et étanche, présentant dans la zone inférieure du réservoir 120 une extrémité inférieure 160A ouverte vers le bas, en biseau, et dans la zone supérieure du réservoir 120 une extrémité supérieure 160B ouverte vers le haut et se raccordant de façon étanche, autour de l'embouchure 183A, au rebord de celle-ci, par exemple par emmanchement coaxial de cette extrémité supérieure 160B dans l'embouchure 183A ou encore par vissage coaxial de cette extrémité supérieure 160B dans l'embouchure 183A, convenablement taraudée à cet effet. L'extrémité inférieure 160A du tube de remontée 160 baigne dans la composition d'extinction d'incendie 200 pour une large gamme d'orientations de l'axe A1 par rapport à la verticale et même s'il ne reste plus qu'un fond de composition d'extinction d'incendie 200 dans le réservoir 120, à la fin de l'utilisation de l'extincteur 100, et le tube de remontée 160 peut ainsi assurer même dans de telles conditions la remontée de la composition d'extinction d'incendie 200 jusqu'à l'embouchure 183A et au débouché 183B du conduit 183.

Le conduit 183 est avantageusement raccordé, de façon étanche, à un tube flexible et étanche de lance 190 muni de moyens d'obturation 191 étanches et d'ouverture commandée et réglée, par action de l'opérateur sur une poignée 191A, par exemple rappelée automatiquement vers un état correspondant à la fermeture étanche du tube 190, lesquels moyens d'obturation 191 sont reliés à un système de diffusion 1 (ou autrement dit une buse d'extinction 1), de la composition d'extinction d'incendie 200 à pulvériser à l'air ambiant.

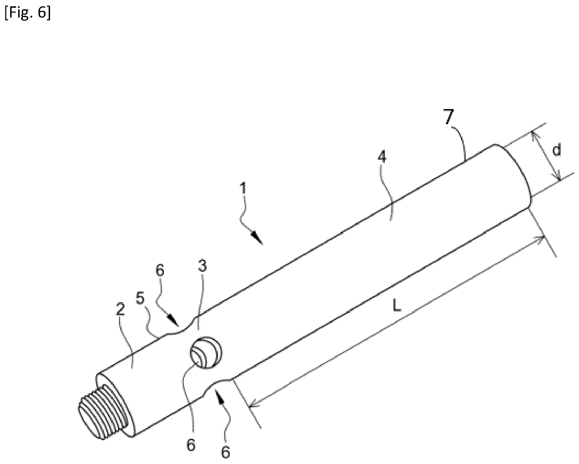

Sans y être limité, le système de diffusion 1 peut être ou comprendre avantageusement une buse d'extinction 1 telle que décrite dans la demande de brevet BE 1028003 A1. Une telle buse d'extinction 1 est représentée à la figure 6, elle comprend une chambre de mélange 2, une chambre de ventilation 3 et une chambre de moussage 4, dans laquelle ladite chambre de ventilation 3 est couplée à ladite chambre de mélange 2, et comprend un premier corps cylindrique creux 5 comprenant 4 trous d'entrée d'air 6, lesdits trous d'entrée d'air 6 sont agencés sur la circonférence et sont dirigés dans le premier corps cylindrique creux 5. La chambre de moussage 4 comprend un second corps cylindrique creux 7 ayant une longueur axiale L et un diamètre intérieur d, laquelle chambre de moussage 4 est couplée à ladite chambre de ventilation 3. La chambre de ventilation 3 et/ou la chambre de moussage 4 comprennent un treillis (non visible), dans laquelle ledit treillis est orienté dans le plan radial de la section transversale intérieure de la chambre de ventilation 3 et/ou de la chambre de moussage 4, et en ce que le rapport entre la longueur axiale et le diamètre intérieur L:d de la chambre de moussage 4 est compris entre 4:5 et 9:5.

Dans une position décalée par rapport à celle du conduit 183, le couvercle 180 est creusé d'un autre conduit 184 présentant quant à lui à la fois une embouchure 184A et un débouché 184B dans la face inférieure 181A de la paroi plate 181.

Plus précisément, de son embouchure 184A à son débouché 184B, le conduit 184 présente un premier tronçon 184C relié à l'embouchure 184A, un deuxième tronçon 184D, un troisième tronçon 184E relié au débouché 184B, et le deuxième tronçon 184D reliant le premier tronçon 184C au troisième tronçon 184E.

Le premier tronçon 184C se prolonge coaxialement vers le haut, au-delà du raccordement du deuxième tronçon 184D, par un alésage 184F débouchant à l'air libre dans la face supérieure 181B de la paroi plate 181. L'alésage 184F définit par son raccordement avec le premier tronçon 184C un épaulement annulaire. L'alésage 184F reçoit et guide au coulissement coaxial une tige 141 des moyens de commande 140 de percussion, qui est étanchéifiée vis-à-vis de l'alésage 184F par une garniture d'étanchéité préservant ainsi l'étanchéité entre le conduit 184 et l'air ambiant. Au-dessus de la face supérieure 181B de la paroi plate 181, cette tige 141 présente une extrémité supérieure convexe 141A, par exemple hémisphérique, autour de laquelle le bossage 182 forme une chape.

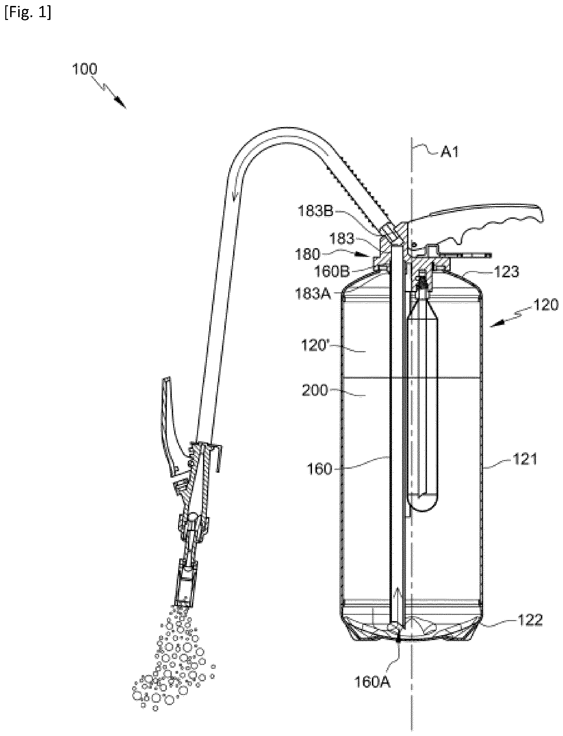

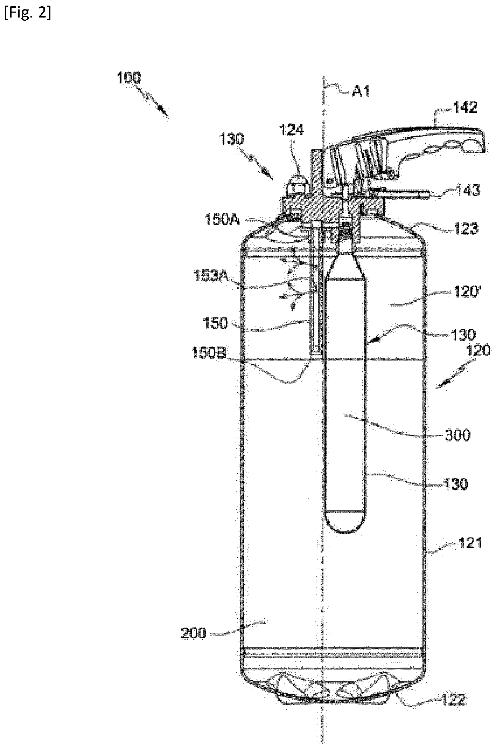

L'extincteur comprend une poignée 142. La poignée 142 peut être de portage et/ou, comme il apparaîtra plus loin, peut être de mise en service de l'extincteur 100 par percussion. Cette poignée 142 s'étend en porte-à-faux, à l'opposé du conduit 183 par rapport à l'axe A1, et la poignée 142 est par exemple montée en pivotement. Tant que l'on ne désire pas mettre l'extincteur 100 en service, la poignée 142 est retenue, par une goupille amovible 143 perpendiculaire à l'axe A1 et prenant appui vers le bas sur la paroi plate 181, dans une position limite haute illustrée aux figures 1 et 2, mais lorsqu'un opérateur désire mettre en service l'extincteur 100, il ôte la goupille 143, ce qui libère la poignée 142 vis-à-vis d'un basculement vers le bas par rapport au bossage 182.

La poignée 142 présente de façon solidaire, au-dessus de l'extrémité supérieure convexe 141A de la tige 141, une surface d'appui 142A permettant, lors d'un basculement de la poignée 142 par l'opérateur, d'appliquer à la tige 141, par l'intermédiaire de son extrémité supérieure convexe 141A, un effort obligeant la tige 141 à coulisser vers le bas à l'intérieur de l'alésage 184F de la paroi plate 181, à partir d'une position haute qui est illustrée aux figures et qu'elle occupe. Dans cette position haute, la surface d'appui 142A est légèrement espacée, vers le haut, de l'extrémité supérieure convexe 141A de la tige 141 occupant elle-même sa position haute mais, lorsque l'opérateur fait basculer la poignée 142 vers le bas après l'avoir dégoupillée, celle-ci vient buter vers le bas par la surface d'appui 142A sur l'extrémité supérieure 141A de la tige 141 puis provoque un mouvement de coulissement de celle-ci vers le bas à l'intérieur de l'alésage 184F de la paroi plate 181.

A l'intérieur du premier tronçon 184C du conduit 184, la tige 141 présente une extrémité inférieure élargie, sous forme d'une collerette 141B, cette collerette 141B est conformée vis-à-vis de l'épaulement de liaison entre l'alésage 184F et le premier tronçon 184C.

La tige 141 se prolonge, vers le bas de façon solidaire, par une aiguille 141C creuse présentant une face périphérique extérieure non référencée d'un diamètre inférieur aux diamètres respectifs de la collerette 141B et du premier tronçon 184C du conduit 184.

La tige 141 et l'aiguille 141C creuse, qui peuvent être réalisées en une seule pièce, constituent un percuteur, actionné par la poignée 142, pour libérer de façon commandée un gaz propulseur 300 sous pression qui est du dioxyde de carbone et qui est destiné à expulser la composition d'extinction d'incendie 200 du réservoir 120.

Ce gaz propulseur 300 est contenu dans une bouteille de chasse 130 logée à l'intérieur du réservoir 120 et raccordée de façon étanche et solidaire, la bouteille de chasse 130 est de préférence amovible, à l'embouchure 184A du premier tronçon 184C du conduit 184, monté par exemple par taraudage.

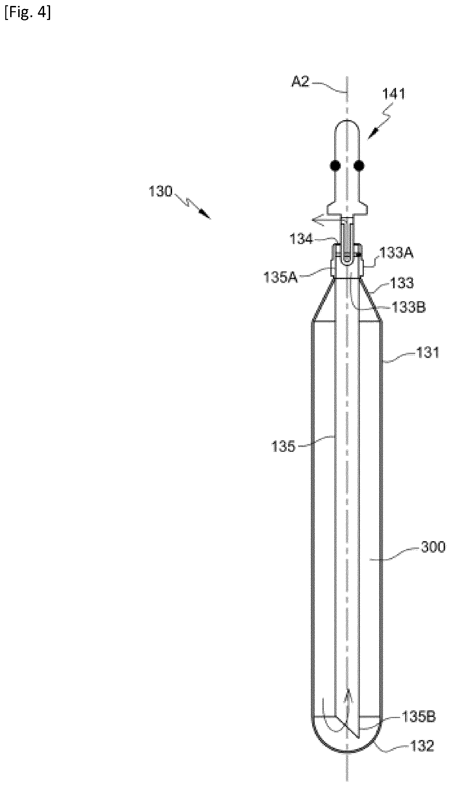

La bouteille de chasse 130 peut présenter une forme de révolution autour d'un axe A2, optionnellement parallèle à l'axe A1. La bouteille de chasse 130 est délimitée par une paroi latérale 131, cylindrique de révolution autour de l'axe A2, avec un diamètre extérieur inférieur, par exemple largement inférieur, au diamètre intérieur de la paroi latérale 121 du réservoir 120 de façon à permettre son introduction, et/ou respectivement son extraction, par l'orifice 123A du réservoir 120, conjointement avec le tube de remontée 160, lors de la mise en place du couvercle 180 sur le réservoir 120 et/ou respectivement lors du démontage de ce couvercle 180 en vue de la maintenance ou du remplissage à nouveau de l'extincteur 100 utilisé. Vers le bas, la paroi 131 se raccorde à une paroi de fond 132, définissant une zone inférieure de la bouteille de chasse 130 et présentant par exemple une convexité vers le bas, c'est-à-dire vers la paroi de fond 122 du réservoir 120 alors que, vers le haut, elle se raccorde à une paroi de sommet 133 définissant une zone supérieure de la bouteille de chasse 130 avec une forme convexe vers le couvercle 180; les parois de fond 132 et de sommet 133 sont par exemple hémisphériques ou la paroi de fond 132 est telle que représentée à la figure 4.

Le terme « haut » se définit par rapport à l'axe A2 comme vers la paroi de sommet 133 de la bouteille de chasse 130, alors que le terme « bas » se définit par rapport à l'axe A2 comme vers la paroi de fond 132 de la bouteille de chasse 130.

Les parois de la bouteille de chasse 130 sont étanches et raccordées mutuellement de façon étanche, si ce n'est que la paroi de sommet 133 se raccorde à un col tubulaire 133A, de révolution autour de l'axe A2, en saillie à partir de son raccordement avec la paroi de sommet 133, et ouverte par un orifice de sortie 133B du gaz propulseur 300.

Lorsque l'extincteur 100 n'est pas en service, l'orifice de sortie 133B est obturé de façon étanche par un opercule 134 étanche de la bouteille de chasse 130, fixé de façon étanche mais de préférence amovible à la bouteille de chasse 130 autour de l'orifice de sortie 133B.

L'opercule 134 est choisi de telle sorte qu'il puisse être aisément perforé par l'aiguille 141C, d'une part, mais l'opercule 134 et sa fixation sont choisis de façon à résister à la surpression régnant à l'intérieur de la bouteille de chasse 130 en comparaison avec l'intérieur du réservoir 120 avant perforation dans des conditions normales de stockage de l'extincteur, d'autre part. L'opercule 134 est de préférence tourné pour se rompre en priorité, c'est-à-dire préférentiellement à la bouteille de chasse 130, en cas de surpression anormalement élevée dans celle-ci, afin d'éviter une explosion de la bouteille de chasse 130 dans un tel cas.

Une fois l'opercule 134 perforé, le gaz propulseur 300 s'échappe de la bouteille de chasse 130 par l'orifice de sortie 133B vers le conduit 184 vers l'espace situé à l'intérieur du réservoir 120 pour mettre en pression la composition d'extinction d'incendie 200.

Cette mise en pression de la composition d'extinction d'incendie 200 est facilitée par la mise en oeuvre d'un tube de mélange 150 étanche au débouché 184B du conduit 184 se raccordant de façon étanche, par exemple par emmanchement, dans ce conduit 184.

Le tube de mélange 150 étanche, rectiligne, présente une 1^{ère} extrémité dite supérieure 150A ouverte directement solidaire du débouché 184B et une 2^{ème} extrémité dite inférieure 150B obturée et qui de préférence n'est pas immergée dans la composition d'extinction d'incendie 200.

Le tube de mélange 150 présente deux orifices latéraux 153A par rapport à l'axe A1 pour libérer le gaz propulseur 300 contenu de la bouteille de chasse 130 directement dans la chambre d'expansion 120' du réservoir 120.

Les orifices latéraux 153A sont radiaux par rapport à l'axe A1, mais comme expliqué ci-dessus, ils pourraient prendre toute orientation suivant un axe secondaire coupant l'axe A1.

Selon un mode de réalisation non représenté, les deux orifices 153A traversent de part en part la paroi du tube de mélange 150 selon une même direction.

Par ailleurs, on s'assure d'une expulsion totale du gaz propulseur 300 hors de la bouteille de chasse 130 en prévoyant à l'intérieur de la bouteille de chasse 130 un tube plongeur 135 étanche présentant une extrémité supérieure 135A raccordée de façon étanche au col 133A, par exemple par emmanchement à force dans celui-ci, et une extrémité inférieure 135B ouverte, par exemple coupée en biseau, dans la zone inférieure de la bouteille de chasse 130.

Dans ces conditions, l'utilisation de l'extincteur 100 s'effectue de la façon suivante, la poignée 142 étant supposée initialement immobilisée au moyen de la goupille 143 dans sa position haute dans laquelle la surface d'appui 142A ne sollicite pas la tige 141, elle-même en position haute, l'opercule 134 étant intact et fermant de façon étanche la bouteille de chasse 130; toute communication est initialement supposée fermée entre le tube flexible de lance 190 et le système de diffusion ou diffuseur 1, par les moyens d'obturation 191. Après avoir ôté la goupille 143, l'opérateur tenant l'extincteur 100 dans la position verticale illustrée aux figures ou dans une position proche de la verticale, dans laquelle le couvercle 180 est tourné vers le haut, presse la poignée 142 pour son basculement vers le bas, ce qui amène la surface d'appui 142A au contact de l'extrémité supérieure 141A de la tige 141 puis provoque un coulissement de cette dernière vers le bas à l'intérieur de l'alésage 184F, avec successivement mise en contact de l'aiguille 141C avec l'opercule 134 puis perforation de ce dernier, ce qui libère le gaz propulseur sous pression 300 initialement contenu dans la bouteille de chasse 130.

Le contenu de la bouteille de chasse 130 est alors libéré par les orifices radiaux 153A pour y être libéré dans la chambre d'expansion 120' du réservoir 120.

La chambre d'expansion 120' est alors pressurisée par le gaz propulseur 300 issu de la bouteille de chasse 130 de sorte que la pression contenue dans cette chambre d'expansion 120' pressurise à son tour le contenu du réservoir 120, favorisant ainsi la remontée de la composition d'extinction d'incendie 200 par le tube de remontée 160.

L'opérateur peut alors, par action sur la poignée 191A, libérer à volonté la composition d'extinction d'incendie 200 qui est dispersée grâce au diffuseur 1.

Lorsque l'extincteur 100 est vide ou pratiquement vide de la composition d'extinction d'incendie 200, il peut être rechargé par démontage du couvercle 180, remplissage en ladite composition d'extinction d'incendie par l'orifice 123A, remplacement de l'ensemble formé par la bouteille de chasse 130, alors vide, et l'opercule 134, perforé, au moyen d'une nouvelle bouteille de chasse 130 contenant la quantité souhaitée de gaz propulseur sous pression 300, obturée par un opercule 134 neuf retenu au niveau de l'orifice 133B de la bouteille de chasse 130, et remontage du couvercle 180 ainsi ré-équipé.

### PARTIE EXPERIMENTALE :

Des essais ont été réalisés avec une composition d'extinction d'incendie selon l'invention et une composition d'extinction d'incendie comparative en mettant en oeuvre le référentiel technique NTA 8133 (novembre 2021) qui décrit les exigences de performance, les méthodes d'essai et le marquage de l'aptitude à l'extinction des feux d'accumulateurs lithium-ion.

La composition d'extinction d'incendie selon l'invention comprenait un agent ignifuge, des tensioactifs anionique et amphotère, des stabilisateurs de mousse et thermique, ainsi qu'un solvant organique choisi parmi les glycols à l'exception des glycols sous forme de polymères et les éthers de glycol dans des quantités telles que décrites ci-dessus.

La composition d'extinction d'incendie comparative était une composition d'extinction d'incendie du commerce recommandée pour son utilisation dans l'extinction d'incendie d'accumulateur lithium-ion.

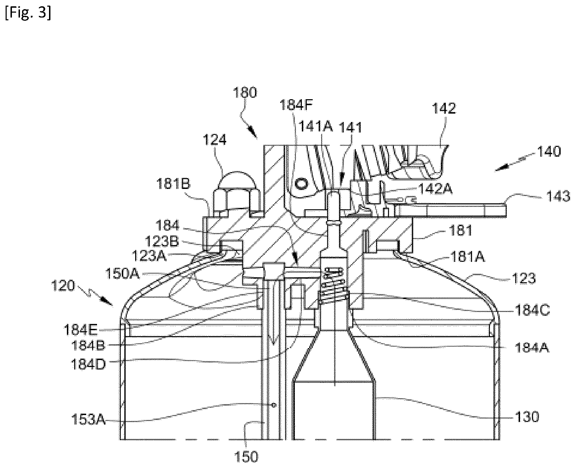

L'extincteur d'incendie utilisé pour ces essais était l'extincteur selon l'invention représenté sur les figures 1 à 6 et qui a été décrit ci-dessus. La bouteille de chasse comprenait 60 g de dioxyde de carbone (gaz propulseur).

L'accumulateur lithium-ion pour ces essais avait une puissance de 600 Wh. Cela correspond à un accumulateur lithium-ion de VTT. Il était composé de 6 ensembles de 4 cellules de type piles plates.

La cellule au centre de l'accumulateur lithium-ion a été chargée au-delà de 100% de telle sorte qu'au bout de 7 à 9 minutes, elle a éclaté et des flammes sont apparues. Cette cellule a transmis la chaleur aux autres cellules adjacentes qui à leur tour ont éclaté.

L'essai était concluant lorsqu'une cellule au moins était intacte. Pour cela, on vérifiait que sa tension était au moins de 3,7V. En outre, il était nécessaire que 2 essais sur une série de 3 essais soient réussis pour valider le protocole d'essai selon le référentiel NTA 8133.

L'essai a été concluant avec la composition d'extinction d'incendie selon l'invention mais pas avec la composition d'extinction d'incendie comparative.

## Revendications

1. Composition d'extinction d'incendie d'accumulateur lithium-ion, **caractérisée en ce qu'**elle est constituée de, en pourcentages massiques exprimés par rapport à la masse totale de ladite composition :
- entre 0,10% et 0,80%, de préférence entre 0,30% et 0,70%, d'au moins un agent ignifuge,
- entre 0,10% et 0,23%, de préférence entre 0,15% et 0,21%, d'au moins un tensioactif amphotère,
- entre 0,10% et 0,23%, de préférence entre 0,15% et 0,21%, d'au moins un tensioactif anionique,
- entre 0,10% et 0,23%, de préférence entre 0,15% et 0,21%, d'au moins un stabilisateur de mousse,
- entre 0,10% et 1,00%, de préférence entre 0,15% et 0,70%, d'au moins un stabilisateur thermique,
- entre 0,10% et 2,00%, de préférence entre 0,5% et 1,00%, d'au moins un solvant organique choisi parmi les glycols à l'exclusion des glycols sous forme de polymères et les éthers de glycol,
- Qsp d'eau, « Qsp » étant l'acronyme pour « Quantité suffisante pour » pour signifier que le pourcentage massique d'eau dans la composition d'extinction d'incendie est tel qu'additionné aux pourcentages de tous les autres constituants de ladite composition d'extinction d'incendie, on obtienne un total de 100%.

2. Composition d'extinction d'incendie selon la revendication 1, **caractérisée en ce que** l'agent ignifuge est choisi dans le groupe constitué par les phosphates d'ammonium, les esters de phosphate, les phosphates halogénés, les phosphonates, le phosphore rouge, le silicate de calcium, le silicate de sodium, le trihydroxyde d'aluminium, le dihydroxyde de magnésium, les éthers de diphényle polybromé, le tétrabromobisphénol A, l'hexabromocyclododécane et les bromophénols, pris seul ou en mélange de ceux-ci.

3. Composition d'extinction d'incendie selon la revendication 2, **caractérisée en ce que** l'agent ignifuge est le phosphate de diammonium et/ou le dihydrogénophosphate d'ammonium.

4. Composition d'extinction d'incendie selon l'une quelconque des revendications 1 à 3, **caractérisée en ce que** le tensioactif amphotère est choisi dans le groupe constitué par la coco diméthyl carboxymethyl bétaïne, l'oléyl bétaïne, la lauryl bis-(2-hydroxyéthyl) carboxyméthyl bétaïne, la lauryl amidopropyl bétaïne, la lauryl diméthyl alpha-carboxyéthyl bétaïne, la stéaryl bis-(2-hydroxypropyl) carboxyméthyl bétaïne et les alkylamphopropionates, pris seul ou en mélange de ceux-ci.

5. Composition d'extinction d'incendie selon l'une quelconque des revendications 1 à 4, **caractérisée en ce que** le tensioactif anionique est choisi dans le groupe constitué par les sulfonates de naphtalène alkylés, l'hydroxypropylsulfonate de cocoglucoside de sodium, les polymères réticulés de cocoglucoside de sodium-hydroxypropylsulfonate et les polymères réticulés de laurylglucoside de sodium-hydroxypropylsulfonate, pris seul ou en mélange de ceux-ci.

6. Composition d'extinction d'incendie selon l'une quelconque des revendications 1 à 5, **caractérisée en ce que** le solvant organique est choisi dans le groupe constitué par l'éthylène glycol, le propylène glycol et l'éther n-propylique de dipropylène glycol, pris seul ou en mélange de ceux-ci.

7. Composition d'extinction d'incendie selon la revendication 1, **caractérisée en ce qu'**elle est constituée de, en pourcentages massiques exprimés par rapport à la masse totale de ladite composition :
- entre 0,10% et 0,80%, de préférence entre 0,30% et 0,70%, d'au moins un agent ignifuge choisi parmi les phosphates d'ammonium,
- entre 0,10% et 0,23%, de préférence entre 0,15% et 0,21%, d'au moins un tensioactif amphotère choisi parmi les bétaïnes et/ou les alkylamphopropionates,
- entre 0,10% et 0,23%, de préférence entre 0,15% et 0,21%, d'au moins un tensioactif anionique choisi parmi les sulfates d'alkyle, les sulfates d'éther alkylique, les sulfonates d'éther alkylique, les esters de sulfate d'un alkylphénoxy polyoxyéthylène éthanol, les sulfates d'ammonium d'alcool, les sulfonates d'alpha-oléfine, les sulfonates de bêta alcoxy alcane, les sulfonates d'alkylauryle, les sulfates de monoglycéride d'alkyle, les sulfonates de monoglycéride d'alkyle, les carbonates d'alkyle, les carboxylates d'éther alkylique, les acides gras, les sulfates d'alcool gras, les sulfosuccinates, les sarcosinates, les phosphates d'octoxynol ou de nonoxynol, les taurates, les taurures gras, les amides d'acide gras-polyoxyéthylènes, les iséthionates et les dérivés anioniques de polyglucosides d'alkyle, pris seul ou en mélange de ceux-ci,
- entre 0,10% et 0,23%, de préférence entre 0,15% et 0,21%, d'au moins un stabilisateur de mousse choisi parmi les alcools et amides gras aliphatiques comportant 8 à 25 atomes de carbone, le polyéthylène glycol et le polypropylène glycol, pris seul ou en mélange de ceux-ci,
- entre 0,10% et 1,00%, de préférence entre 0,15% et 0,70%, d'au moins un stabilisateur thermique choisi parmi le phosphate d'ammonium, les phosphates d'ester, le citrate de sodium, le sucrose, le maltose, le dextrose, le bicarbonate de sodium, le carbonate de sodium, le carbonate de potassium, le bicarbonate de potassium, le sulfate de sodium et l'orthophosphate de sodium, pris seul ou en mélange de ceux-ci,
- entre 0,10% et 2,00%, de préférence entre 0,50% et 1,00%, d'au moins un solvant organique choisi parmi l'éthylène glycol, le propylène glycol, le butyl-di-glycol, l'éther n-propylique de dipropylène glycol, l'éther n-butylique de dipropylène glycol, l'éther n-butylique de propylène glycol, le propylène glycol, l'éther n-propylique, l'éther n-butylique de tripropylène glycol, l'éther phénylique de propylène glycol, l'éther phénylique de dipropylène glycol, l'éther diméthylique de dipropylène glycol, l'éther méthylique de propylène glycol, l'acétate d'éther méthylique de propylène glycol, l'éther méthylique de dipropylène glycol, l'acétate d'éther méthylique de dipropylène glycol, l'éther méthylique de tripropylène glycol, l'éther hexylique d'éthylène glycol, l'éther hexylique de diéthylène glycol, l'éther monométhylique d'éthylène glycol, l'éther monoéthylique d'éthylène glycol, l'éther monopropylique d'éthylène glycol, l'éther monoisopropylique d'éthylène glycol, l'éthylène glycol, l'éther monobutylique, l'éther monobenzylique d'éthylène glycol, l'éther phénylique de diéthylène glycol, l'éther phénylique d'éthylène glycol, poly(oxy-1,2-éthanediyle), l'éther monométhylique de diéthylène glycol, l'éther monoéthylique de diéthylène glycol, l'éther *n*-butylique de diéthylène glycol, l'éther *n*-butylique d'éthylène glycol et l'éther méthylique de dipropylène glycol, pris seul ou en mélange de ceux-ci,
- Qsp d'eau.

8. Composition d'extinction d'incendie selon la revendication 1, **caractérisée en ce qu'**elle est constituée de, en pourcentages massiques exprimés par rapport à la masse totale de ladite composition :
- entre 0,10% et 0,80%, de préférence entre 0,30% et 0,70%, d'au moins un agent ignifuge choisi parmi le phosphate de diammonium et/ou le dihydrogénophosphate d'ammonium,
- entre 0,10% et 0,23%, de préférence entre 0,15% et 0,21%, d'au moins un tensioactif amphotère choisi dans le groupe constitué par la coco diméthyl carboxymethyl bétaïne, l'oléyl bétaïne, la lauryl bis-(2-hydroxyéthyl) carboxyméthyl bétaïne, la lauryl amidopropyl bétaïne, la lauryl diméthyl alpha-carboxyéthyl bétaïne, la stéaryl bis-(2-hydroxypropyl) carboxyméthyl bétaïne et les alkylamphopropionates, pris seul ou en mélange de ceux-ci,
- entre 0,10% et 0,23%, de préférence entre 0,15% et 0,21%, d'au moins un tensioactif anionique choisi dans le groupe constitué par les sulfonates de naphtalène alkylés, l'hydroxypropylsulfonate de cocoglucoside de sodium, les polymères réticulés de cocoglucoside de sodium-hydroxypropylsulfonate et les polymères réticulés de laurylglucoside de sodium-hydroxypropylsulfonate, pris seul ou en mélange de ceux-ci,
- entre 0,10% et 0,23%, de préférence entre 0,15% et 0,21%, d'au moins un stabilisateur de mousse choisi parmi l'alcool laurique, myristique, cétylique, le polyéthylène glycol et le polypropylène glycol, pris seul ou en mélange de ceux-ci,
- entre 0,10% et 1,00%, de préférence entre 0,15% et 0,70%, d'au moins un stabilisateur thermique choisi parmi le sucrose, le maltose et le dextrose, pris seul ou en mélange de ceux-ci,
- entre 0,10% et 2,00%, de préférence entre 0,50% et 1,00%, d'au moins un solvant organique choisi parmi l'éthylène glycol, le propylène glycol et l'éther n-propylique de dipropylène glycol, pris seul ou en mélange de ceux-ci.
- Qsp d'eau.

9. Extincteur d'incendie (100), **caractérisé en ce qu'**il comprend une composition d'extinction d'incendie selon l'une quelconque des revendications 1 à 8.

10. Extincteur d'incendie (100) selon la revendication 9 comportant :
- un réservoir (120) étanche s'étendant selon un axe (A1) et contenant la composition d'extinction d'incendie selon l'une quelconque des revendications 1 à 9, ledit réservoir (120) est configuré pour comprendre une chambre d'expansion (120') formée par une partie du réservoir (120) non remplie par ladite composition d'extinction d'incendie,
- une bouteille de chasse (130), étanche et contenant un gaz propulseur (300) sous pression, à usage de propulseur pour la composition d'extinction d'incendie, la bouteille de chasse (130) étant logée à l'intérieur du réservoir (120) et présentant, pour le gaz propulseur (300), une sortie (133B) reliée de façon fluidique à l'intérieur du réservoir (120),
**caractérisé en ce que** ledit extincteur d'incendie (100) comporte en outre :
- un tube de mélange (150) présentant une 1^{ère} extrémité (150A) et une 2^{ème} extrémité (150B), la 1^{ère} extrémité (150A) étant reliée de façon fluidique à la sortie de la bouteille de chasse (130) et la 2^{ème} extrémité (150B) étant obturée, ledit tube de mélange (150) comporte au moins un orifice latéral (153A) par rapport à l'axe (A1) et qui est configuré pour libérer le gaz propulseur (300) dans la chambre d'expansion (120') dudit réservoir (120).

11. Extincteur d'incendie (100) selon la revendication 10, **caractérisé en ce que** l'au moins un orifice latéral (153A) présente un diamètre compris entre 0,5 mm et 2,5 mm.

12. Extincteur d'incendie (100) selon la revendication 10 ou 11, **caractérisé en ce que** le tube de mélange (150) comporte deux orifices radiaux (153A) par rapport à l'axe du réservoir (A1).

13. Extincteur d'incendie (100) selon l'une quelconque des revendications 10 à 12, **caractérisé en ce qu'**il comprend en outre un tube de remontée (160) et un tube flexible de lance (190), ledit tube de remontée (160) est relié de façon fluidique audit tube flexible de lance (190) qui est muni de moyens d'obturation (191) étanches et dont l'ouverture est commandée et réglée pour libérer la composition d'extinction d'incendie selon l'une quelconque des revendications 1 à 9.

14. Extincteur d'incendie (100) selon l'une quelconque des revendications 10 à 13, **caractérisé en ce qu'**il comporte un système de diffusion (1), configuré pour la pulvérisation de la composition d'extinction d'incendie selon l'une quelconque des revendications 1 à 8, qui est un diffuseur à effet Venturi.

15. Procédé d'extinction d'un incendie d'un accumulateur lithium-ion, **caractérisé en ce qu'**on pulvérise une composition d'extinction d'incendie selon l'une quelconque des revendications 1 à 8 avec un extincteur d'incendie selon l'une quelconque des revendications 9 à 14 sur un accumulateur lithium-ion en feu.
